# EUROPEAN PATENT SPECIFICATION

(11) **EP 2 912 120 B1**
(45) Date of publication and mention of the grant of the patent: **20.12.2017**
(21) Application number: 13783294.5
(22) Date of filing: 21.10.2013
(51) Int. Cl.: C09D 5/16

(54) **ANTIFOULING COATING COMPOSITION**
FÄULNISVERHINDERNDE BESCHICHTUNGSZUSAMMENSETZUNG
COMPOSITION DE REVÊTEMENT ANTISALISSURE

(30) Priority: 23.10.2012 EP 12189637
(43) Date of publication of application: 02.09.2015
(73) Proprietor: Jotun A/S, 3202 Sandefjord (NO)
(72) Inventor: DAHLING, Marit, N-3218 Sandefjord (NO); ESMURZIEV, Aslan, N-3214 Sandefjord (NO)
(74) Representative: Campbell, Neil Boyd
(86) International application number: PCT/EP2013/071963
(87) International publication number: WO 2014/064048

(56) References cited:
- US-A1- 2005 255 081
- US-A1- 2006 189 708

## Description

### Field of Invention

The present invention relates to antifouling coating compositions with improved storage stability, in particular, to antifouling coating compositions comprising silyl ester copolymers, organic colour pigments, antifouling agents and a carbodiimide stabiliser to ensure the stability of the compositions. The invention also relates to surfaces coated in said antifouling coating compositions.

### Background of Invention

Surfaces that are submerged in seawater are subjected to fouling by marine organisms such as green and brown algae, barnacles, mussels, tube worms and the like. On marine constructions such as vessels, oil platforms, buoys, etc. such fouling is undesired and has economical consequences. The fouling may lead to biological degradation of the surface, increased load and accelerated corrosion. On vessels the fouling will increase the frictional resistance which will cause reduced speed and/or increased fuel consumption. It can also result in reduced manoeuvrability.

To prevent settlement and growth of marine organisms antifouling paints are used. These paints generally comprise a film-forming binder, together with different components such as pigments, fillers, solvents and biologically active substances.

The most successful self-polishing antifouling systems on the market today are based on silyl ester functional (meth)acrylic copolymers. These coating compositions are for example described in, EP 0 646 630, EP 0 802 243, EP 1 342 756, EP 1 479 737, EP 1 641 862, WO 00/77102, WO 03/070832 and WO 03/080747.

Silyl ester copolymers contain hydrolysable silyl groups pendant on the polymer backbone. These hydrolysable groups are key to the surface degradation process, one of the most important factors for obtaining a successful antifouling coating. In the presence of water the silyl ester groups will hydrolyse and carboxylic acid groups are formed on the polymer backbone. This makes the polymer hydrophilic and thereby water erodable. A certain amount of hydrolysable groups are needed to get sufficient hydrophilicity and an erodable polymer after hydrolysis.

A disadvantage of silyl ester copolymer based antifouling compositions is that the hydrolysis of the silyl groups may take place during storage if moisture is present. The raw materials used in paint production often contain moisture and water may be formed during the manufacture and storage of the coating formulation due to reactions between specific raw materials. If hydrolysis occurs, the resulting carboxylic acid groups formed can react with raw materials present in the coating formulation, e.g. metal ions. A reaction with bivalent metal ions present, e.g. in the form of cuprous oxide and zinc oxide, will result in the formation of cross-links between the polymer chains and an increase in the viscosity or gelling of the paint is observed. These possible reactions mean that antifouling coating compositions containing silyl ester copolymers are prone to limited shelf-life due to poor storage stability.

To improve the storage stability of antifouling coating compositions containing silyl ester copolymers in general, dehydrating agents or desiccants are used to remove or bind any moisture present in the formulation. Most commonly used are silicates, anhydrous calcium sulphate and zeolites/molecular sieves. The problem with most desiccants is that the binding of water is a reversible process and some hydrolysis of the silyl ester copolymer will still occur during storage resulting in increased viscosity of the paint.

Other stabilisers of possible use in organosilyl (meth)acrylate polymers based coating formulations are disclosed in US 2005/0255081. These include triorgano phosphites, triorgano amines, heteroaromatic nitrogen compounds, carbodiimides and mixtures thereof.

The potential stability problems are particularly prominent when the antifouling coating formulation contains organic colour pigments. Most antifouling coating formulations get their colour from the use of cuprous oxide in combination with inorganic colour pigments, such as titanium dioxide and iron oxide. Organic colour pigments are used to produce antifouling coating formulations in bright colours. Organic pigments have, however, a propensity to act as catalysts, e.g. by strong acidity or Lewis acidity, in the hydrolysis of the silyl ester copolymers. As a result, stability of such formulations is particularly low.

We have surprisingly found that carbodiimide compounds specifically improve the storage stability of antifouling coating compositions containing a hydrolysable polymer, such as silyl ester copolymer, organic colour pigments and an antifouling agent. This improvement is markedly better than that which is achieved using conventional stabilising agents such as dehydrating agents.

Carbodiimides can act as acid- and water scavengers. It is believed that carbodiimide groups react specifically with the carboxylic acid groups formed as the result of hydrolysis of the silyl ester in storage, thereby preventing the cross-linking reaction of the carboxylic acid groups and divalent metal oxides and other reactive compounds in the paint formulation thus avoiding an increase in the viscosity of the paint. Despite the presence of the organic colour pigment, and the catalytic effect the colour pigment provides, the problem of gelling is avoided as it is believed that the carbodiimide reacts with free carboxylic acid groups to stop the cross-linking reaction. In the reactions with water the carbodiimides will hydrolyse to form ureas.

The object of the present invention is therefore to provide an antifouling coating composition comprising a hydrolysable silyl ester copolymer, organic colour pigments and an antifouling agent which exhibits improved storage stability over those known in the art. Improved storage stability also gives improved predictability of the polishing rate and thereby the antifouling performance of the coating formulations. These objectives are attained through the use of a carbodiimide as the stabiliser in an antifouling coating composition containing these problematic colour pigments.

### Summary of Invention

Thus, viewed from one aspect the invention provides an antifouling coating composition comprising a silyl ester copolymer, a carbodiimide stabiliser, an organic colour pigment and an antifouling agent.

Viewed from another aspect the invention provides a process for protecting an object from fouling comprising coating at least a part of said object which is subject to fouling with an antifouling coating composition as hereinbefore described.

Viewed from another aspect the invention provides an object coated with an antifouling coating composition as hereinbefore defined.

### Detailed Description

The antifouling coating composition of the current invention comprises at least three components; a silyl ester copolymer, a carbodiimide stabiliser, an organic colour pigment and an antifouling agent.

### Silyl ester copolymer

The use of silyl ester copolymers in antifouling coating compositions is well known and, in its broadest embodiment, the invention covers any of these well known hydrolysable binders. Such silyl ester copolymers are well known commercial products.

In a preferred embodiment, the silyl ester copolymer of the invention comprises the residue of at least one monomer (A) of formula (I) 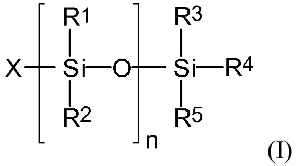 wherein
R¹ and R² are each independently selected from linear or branched C₁₋₄ alkyl groups;
R³, R⁴ and R⁵ are each independently selected from the group consisting of linear or branched C₁₋₂₀ alkyl groups, C₃₋₁₂ cycloalkyl groups, optionally substituted C₆₋₂₀ aryl groups and -OSi(R⁶)₃ groups;
each R⁶ is independently a linear or branched C₁₋₄ alkyl group,
n is an integer from 0 to 5;
X is an ethylenically unsaturated group, such as acryloyloxy group, methacryloyloxy group, (methacryloyloxy)alkylenecarbonyloxy group, (acryloyloxy)alkylenecarbonyloxy group, maleinoyloxy group, fumaroyloxy group, itaconoyloxy group and citraconoyloxy group.

The term "alkyl" is intended to cover both linear or branched alkyl groups such as methyl, ethyl, propyl, and butyl, or cycloalkyl groups. Particularly preferred cycloalkyl groups include cyclohexyl and substituted cyclohexyl.

Examples of the substituted aryl groups include aryl groups substituted with at least one substituent selected from halogens, alkyl groups having 1 to about 8 carbon atoms, acyl groups, or a nitro group. Particularly preferred aryl groups include substituted and unsubstituted phenyl, benzyl, phenalkyl or naphthyl.

In a further preferred embodiment, the silyl ester copolymer of the present invention comprises one or more monomers (A) having silyl ester functionality as defined by the general formula (I) in the amount of 1-99 % by mole of the total mixture of monomers, more preferably 15-60 % by mole, most preferably 20-40% by mole.

Ideally, preferred silyl ester monomers are based on compounds of formula (I) in which n is 0, i.e. those of formula X-SiR³R⁴R⁵.

Examples of monomers containing silyl ester functionality, e.g. as defined by the general formula (I) include:
silyl ester monomers of acrylic acid and methacrylic acid, such as triethylsilyl (meth)acrylate, tri-n-propylsilyl (meth)acrylate, triisopropylsilyl (meth)acrylate, tri-n-butylsilyl (meth)acrylate, triisobutylsilyl (meth)acrylate, tri-tert-butylsilyl (meth)acrylate, tri-sec-butylsilyl (meth)acrylate, tri-n-pentylsilyl (meth)acrylate, triisopentylsilyl (meth)acrylate, tri-n-hexylsilyl (meth)acrylate, tri-n-octylsilyl (meth)acrylate, tri-n-dodecylsilyl (meth)acrylate, triphenylsilyl (meth)acrylate, tri(p-methylphenyl)silyl (meth)acrylate, tribenzylsilyl (meth)acrylate, ethyldimethylsilyl (meth)acrylate, n-propyldimethylsilyl (meth)acrylate, isopropyldimethylsilyl (meth)acrylate, n-butyldimethylsilyl (meth)acrylate, isobutyldimethylsilyl (meth)acrylate, tert-butyldimethylsilyl (meth)acrylate, n-pentyldimethylsilyl (meth)acrylate, n-hexyldimethylsilyl (meth)acrylate, neohexyldimethylsilyl (meth)acrylate, n-octyldimethylsilyl (meth)acrylate, n-decyldimethylsilyl (meth)acrylate, dodecyldimethylsilyl (meth)acrylate, n-octadecyldimethylsilyl (meth)acrylate, cyclohexyldimethylsilyl (meth)acrylate, phenyldimethylsilyl (meth)acrylate, benzyldimethylsilyl (meth)acrylate, phenethyldimethylsilyl (meth)acrylate, (3-phenylpropyl)dimethylsilyl (meth)acrylate, p-tolyldimethylsilyl (meth)acrylate, isopropyldiethylsilyl (meth)acrylate, n-butyldiisopropylsilyl (meth)acrylate, n-octyldiisopropylsilyl (meth)acrylate, methyldi-n-butylsilyl (meth)acrylate, methyldicyclohexylsilyl (meth)acrylate, methyldiphenylsilyl (meth)acrylate, tert-butyldiphenylsilyl (meth)acrylate, nonamethyltetrasiloxy (meth)acrylate, bis(trimethylsiloxy)methylsilyl (meth)acrylate, tris(trimethylsiloxy)silyl (meth)acrylate;
silyl ester monomers of maleic acid such as triethylsilyl ethyl maleate, tri-n-propylsilyl n-propyl maleate, triisopropylsilyl methyl maleate, tri-n-butylsilyl n-butyl maleate and tri-n-hexylsilyl n-hexyl maleate;
silyl ester monomers of fumaric acid such as triethylsilyl ethyl fumarate, tri-n-propylsilyl n-propyl fumarate, triisopropylsilyl methyl fumarate, tri-n-butylsilyl n-butyl fumarate and tri-n-hexylsilyl n-hexyl fumarate;
silyl esters monomers of oxycarbonlyalkyl (meth)acrylate such as triethylsiloxycarbonylmethyl (meth)acrylate, tri-n-propylsiloxycarbonylmethyl (meth)acrylate, triisopropylsiloxycarbonylmethyl (meth)acrylate, tri-n-butylsiloxycarbonylmethyl (meth)acrylate, triisobutylsiloxycarbonylmethyl (meth)acrylate, tri-tert-butylsiloxycarbonylmethyl (meth)acrylate, tri-sec-butylsiloxycarbonylmethyl (meth)acrylate, tri-n-pentylsiloxycarbonylmethyl (meth)acrylate, triisopentylsiloxycarbonylmethyl (meth)acrylate, tri-n-hexylsiloxycarbonylmethyl (meth)acrylate, tri-n-octylsiloxycarbonylmethyl (meth)acrylate, tri-n-dodecylsiloxycarbonylmethyl (meth)acrylate, triphenylsiloxycarbonylmethyl (meth)acrylate, tri-(p-methylphenyl)siloxycarbonylmethyl (meth)acrylate, tribenzylsiloxycarbonylmethyl (meth)acrylate, ethyldimethylsiloxycarbonylmethyl (meth)acrylate, n-propyldimethylsiloxycarbonylmethyl (meth)acrylate, isopropyldimethylsiloxycarbonylmethyl (meth)acrylate, n-butyldimethylsiloxycarbonylmethyl (meth)acrylate, isobutyldimethylsiloxycarbonylmethyl (meth)acrylate, tert-butyldimethylsiloxycarbonylmethyl (meth)acrylate, n-pentyldimethylsiloxycarbonylmethyl (meth)acrylate, n-hexyldimethylsiloxycarbonylmethyl (meth)acrylate, neohexyldimethylsiloxycarbonylmethyl (meth)acrylate, n-octyldimethylsiloxycarbonylmethyl (meth)acrylate, n-decyldimethylsiloxycarbonylmethyl (meth)acrylate, dodecyldimethylsiloxycarbonylmethyl (meth)acrylate, n-octadecyldimethylsiloxycarbonylmethyl (meth)acrylate, cyclohexyldimethylsiloxycarbonylmethyl (meth)acrylate, phenyldimethylsiloxycarbonylmethyl (meth)acrylate, benzyldimethylsiloxycarbonylmethyl (meth)acrylate, phenethyldimethylsiloxycarbonylmethyl (meth)acrylate, (3-phenylpropyl)dimethylsiloxycarbonylmethyl (meth)acrylate, p-tolyldimethylsiloxycarbonylmethyl (meth)acrylate, isopropyldiethylsiloxycarbonylmethyl (meth)acrylate, n-butyldiisopropylsiloxycarbonylmethyl (meth)acrylate, n-octyldiisopropylsiloxycarbonylmethyl (meth)acrylate, methyldi-n-butylsiloxycarbonylmethyl (meth)acrylate, methyldicyclohexylsiloxycarbonylmethyl (meth)acrylate, methyldiphenylsiloxycarbonylmethyl (meth)acrylate, tert-butyldiphenylsiloxycarbonylmethyl (meth)acrylate; and others as described in WO03/080747.

The polymerizable monomers other than monomers A are monomers copolymerizable with monomers A. Examples thereof include (meth)acrylic acid and (meth)acrylic esters such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, amyl (meth)acrylate, hexyl (meth)acrylate, 2-ethylhexyl (meth)acrylate, n-octyl (meth)acrylate, isooctyl (meth)acrylate, 3,5,5-trimethylhexyl (meth)acrylate, decyl (meth)acrylate, isodecyl (meth)acrylate, dodecyl (meth)acrylate, isotridecyl (meth)acrylate, octadecyl (meth)acrylate, cyclohexyl (meth)acrylate, 4-tert-butylcyclohexyl (meth)acrylate, dicyclopentenyl (meth)acrylate, dicyclopentenyl oxyethyl (meth)acrylate, isobornyl (meth)acrylate, phenyl (meth)acrylate, benzyl (meth)acrylate, naphthyl (meth)acrylate, 2-hydroxyethyl (meth)acrylate, hydroxypropyl (meth)acrylate, hydroxybutyl (meth)acrylate, poly(ethylene glycol) (meth)acrylate, poly(propylene glycol) (meth)acrylate, 2-methoxyethyl (meth)acrylate, 2-ethoxyethyl (meth)acrylate, 2-butoxyethyl (meth)acrylate, 2-phenoxyethyl (meth)acrylate, ethyl diglycol (meth)acrylate, ethyl triglycol (meth)acrylate, butyl diglycol (meth)acrylate, poly(ethylene glycol) methyl ether (meth)acrylate, poly(propylene glycol) methyl ether (meth)acrylate, tetrahydrofurfuryl (meth)acrylate, glycidyl (meth)acrylate, 2-(dimethylamino)ethyl (meth)acrylate, 2-(diethylamino)ethyl (meth)acrylate, 3-(dimethylamino)propyl (meth)acrylate, 3-(diethylamino)propyl (meth)acrylate, 2-(*tert-*butylamino)ethyl (meth)acrylate and lactone modified hydroxyalkyl (meth)acrylates such as caprolactone acrylate and others as described in WO 2009/149919;
Other examples of the polymerizable monomers include esters of crotonic acid, maleic acid, fumaric acid, itaconic acid and citraconic acid such as methyl crotonate, ethyl crotonate, isobutyl crotonate, hexyl crotonate, dimethyl maleate, diethyl maleate, dibutyl maleate, maleic anhydride, dimethyl fumarate, diethyl fumarate, diisobutyl fumarate, dimethyl itaconate, dibutyl itaconate, itaconic anhydride, citraconic anhydride;

vinyl esters such as vinyl acetate, vinyl propionate, vinyl butyrate, vinyl pivalate, vinyl dodecanoate, vinyl benzoate, vinyl 4-*tert*-butylbenzoate, VeoVa™ 9, VeoVa™ 10;
(meth)acrylamide, *N-*propyl (meth)acrylamide, *N*-isopropyl (meth)acrylamide, *N-tert*-butyl (meth)acrylamide, *N*-phenyl (meth)acrylamide, *N*-methylol (meth)acrylamide, *N-*(isobutoxymethyl) (meth)acrylamide, *N-*[3-(dimethylamino)propyl] (meth)acrylamide, diacetone (meth)acrylamide, *N,N-*dimethyl (meth)acrylamide;
metal salts of acrylic acid and methacrylic acid and other metal functional monomers, e.g. as described in EP 1 323 745, (meth)acrylonitrile, 2-(acetoacetoxy)ethyl (meth)acrylate and other monomers as described in WO 96/41842 and US 4 593 055;
maleimide and N-substituted maleimides such as maleimide, N-phenyl maleimide and others as described in WO 96/41841;
N-vinyl lactams, N-vinyl amides such as N-vinyl pyrrolidone, and other lactam and amide functional monomers as described in EP 1 127 902;
other vinyl monomers such as styrene, α-methyl styrene, vinyl toluene and *p*-chlorostyrene.

In producing the polymer containing organosilyl ester groups, the proportion of at least one of monomers A represented by formula (I) to at least one polymerizable monomer other than monomers A can be suitably determined according to the use of the coating composition. In general, however, the proportion of at least one of monomers A is preferably from 1 to 99% by mole and that of at least one other monomer is preferably from 99 to 1% by mole, preferably 15-60 % by mole, more preferably 20-40 % by mole of the total mixture of comonomers.

The polymer containing organosilyl ester groups can be obtained by polymerizing such a monomer mixture in the presence of a polymerization catalyst by any of various methods such as solution polymerization, bulk polymerization, emulsion polymerization, and suspension polymerization in an ordinary way. In preparing a coating composition using this polymer containing organosilyl ester groups, the polymer is preferably diluted with an organic solvent to give a polymer solution having an appropriate viscosity. From this standpoint, it is desirable to employ solution polymerization.

Examples of the polymerization initiators include azo compounds such as azo compounds such as 2,2'-azobis(2-methylbutyronitrile), 2,2'-azobis(isobutyronitrile) and 1,1'-azobis(cyanocyclohexane) and peroxides such as *tert*-butyl peroxypivalate, *tert-*butyl peroxy-2-ethylhexanoate, *tert*-butyl peroxydiethylacetate, *tert*-butyl peroxyisobutyrate, di-*tert*-butyl peroxide, *tert*-butyl peroxybenozate, and *tert*-butyl peroxyisopropylcarbonate, *tert*-amyl peroxypivalate, *tert*-amyl peroxy-2-ethylhexanoate, 1,1-di(*tert*-amyl peroxy)cyclohexane and dibenzoyl peroxide. These compounds are used alone or as a mixture of two or more thereof.

Examples of the organic solvent include aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, tert-butyl acetate, amyl acetate, ethylene glycol methyl ether acetate; ethers such as ethylene glycol dimethyl ether, diethylene glycol dimethyl ether, dibutyl ether, dioxane, tetrahydrofuran, alcohols such as n-butanol, isobutanol, benzyl alcohol; ether alcohols such as butoxyethanol, 1-methoxy-2-propanol; aliphatic hydrocarbons such as white spirit; and optionally a mixture of two or more solvents. These compounds are used alone or as a mixture of two or more thereof.

The thus-obtained polymer containing organosilyl ester groups desirably has a weight-average molecular weight of from 1,000 to 100,000. The solution of the polymer desirably has a viscosity of 50 P or lower, preferably 20 P or lower at 25°C. For attaining such a viscosity, the polymer solution is desirably regulated so as to have a solid content of from 5 to 90% by weight, preferably from 15 to 85% by weight, more preferably from 40 to 75% by weight.

### Carbodiimide

A carbodiimide compound is one containing a functional group represented by the formula [-N=C=N-] in the molecule. The carbodiimide stabiliser compound, in its broadest definition according to the present invention, is not subject to any special requirement in respect of its chemical structure as long as the carbodiimide is capable of stabilizing the antifouling coating composition within the meaning of the present invention. Useful carbodiimides for use in the present invention include those known in the art and synthesised by commonly known methods.

In a preferred embodiment the carbodiimide is represented by the general formula (i): 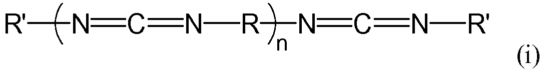 wherein
R is an optionally substituted alkylene, optionally substituted mono or dicycloalkylene or optionally substituted arylene group;
each R' is independently identical or different and is selected from optionally substituted alkyl, optionally substituted cycloalkyl or optionally substituted aryl groups, and
n is an integer from 0 to 500, preferably from 0 to 50. R and R' may be the same or different.

It will be appreciated that the carbodiimide group should bind to the named group in the formula definition (e.g. the aryl ring or cycloalkyl ring) as opposed to a substituent on that group.

The term "alkyl" is intended to cover both linear or branched alkyl groups. Preferred alkyl groups have 1 to 8 carbon atoms such as methyl, ethyl, propyl, and butyl. Examples of the substituted alkyl groups include alkyl groups substituted with at least one substituent selected from halogens, and amines.

Cycloalkyl groups are preferably C₃₋₈-cycloalkyl groups such as cyclopentyl or cyclohexyl. Examples of dicycloalkylene groups include cycloalkyl groups linked by a C₁₋₆ alkylene chain such as dicyclohexylmethane for example.

Aryl groups are preferably phenyl or naphthyl. Examples of the substituted aryl groups include aryl groups substituted with at least one substituent selected from halogens, alkyl groups having 1 to 8 carbon atoms and C₃₋₈-cycloalkyl groups. Preferred substituents on the aryl group are branched alkyl or cycloalkyl radicals having 3 or more carbon atoms, e.g. 3 to 8 carbon atoms, such as isopropyl groups. There may be one or more such substituents, preferably two or more such substituents.

The present inventors have surprisingly found that carbodiimides of formula (i) are particularly well suited for providing stabilisation to the antifouling coating compositions of the current invention, which comprise an organic colour pigment.

In a preferred embodiment of the invention, a monocarbodiimide (monomeric carbodiimide) is used. The compounds concerned preferably have the formula (ii) (i.e. compounds of formula (i) where n=0):

R'-N=C=N-R' (ii)

wherein R' is as previously defined.

In this embodiment, it is preferred if each R' is independently selected from the group consisting of C₁₋₈ alkyl, C₃₋₈-cycloalkyl and optionally substituted C₆₋₁₀-aryl. Preferable substituents include halogens, alkyl groups having 1 to 8 carbon atoms and C₃₋₈-cycloalkyl groups. Branched alkyl or cycloalkyl radicals having 3 or more carbon atoms, such as isopropyl groups are especially preferred, e.g. 3 to 8 carbon atoms. It is preferred if both R' groups are the same.

Examples of a monocarbodiimide compound include:
1,3-dicyclohexylcarbodiimide, 1,3-diisopropylcarbodiimide, 1,3-dimethylcarbodiimide,
1,3-diisobutylcarbodiimide, 1,3-dioctylcarbodiimide, 1-*tert*-butyl-3-ethylcarbodiimide,
1-*tert*-butyl-3-isopropylcarbodiimide, 1,3-di-*sec*-butylcarbodiimide,
1,3-di-*tert*-butylcarbodiimide, bis(2,6-diisopropylphenyl)carbodiimide,
1,3-di-*p*-tolylcarbodiimide and 1,3-diphenylcarbodiimide of which
1,3-diisopropylcarbodiimide, 1,3-di-*sec*-butylcarbodiimide and bis(2,6-diisopropylphenyl)carbodiimide, are particularly preferable.

Examples of commercially available monocarbodiimides which may be used in the present invention are Additin RC 8500, Stabaxol I and Stabaxol I LF from Rhein Chemie Rheinau GmbH and Stabilisator 7000 and Stabilisator 7000 F from Rasching GmbH.

An alternative embodiment of the present invention utilizes a dimeric or polymeric carbodiimide [i.e. having n ≥ 1 in formula (i)]. Such compounds may therefore have repeating units of formula (iii):

-(-N=C=N-R)_{q}- (iii)

wherein R is as previously defined; and
q is ≥ 2.

Examples of dimeric and polymeric carbodiimide compounds include 4,4'-dicyclohexylmethanecarbodiimide (degree of polymerization=2 to 20), tetramethylxylylenecarbodiimide (degree of polymerization=2 to 20), N,N-dimethylphenylcarbodiimide (degree of polymerization=2 to 20) and N,N'-di-2,6-diisopropylphenylenecarbodiimide (degree of polymerization=2 to 20) and the like, and is not specifically limited as long as the compound has at least one carbodiimide group in a molecule having such function.

Examples of commercially available polymeric carbodiimides which can be used for the present invention are Stabaxol P, Stabaxol P100 and Stabaxol P200 from Rhein Chemie Rheinau GmbH and Stabilisator 9000 from Rasching GmbH.

In all embodiments of the invention the carbodiimide may be a monomeric, dimeric or polymeric carbodiimide. Alternatively, a mixture of two or more carbodiimides of any of the types listed may be employed. When a mixture of carbodiimides is used, the carbodiimides used may be selected from the group consisting of monomeric, dimeric or polymeric carbodiimides.

In all embodiments of the invention, the carbodiimide compounds are used in amounts of in each case between 0.001% by weight and 10% by weight, preferably 0.01% by weight and 5% by weight, more preferably 0.01% by weight and 2% by weight, even more preferably between 0.1% and 2% by weight and yet even more preferably between 0.2% and 1% by weight, all based on the antifouling coating composition.

The carbodiimide or mixture of carbodiimides may be used as the sole stabiliser in the antifouling coating composition of the invention. Alternatively, the carbodiimide or mixture of carbodiimides is used in combination with a further stabilising agent. Any known agent suitable for increasing the stability of an antifouling coating composition may be used, however, dehydrating agents and desiccants are particularly preferred.

Dehydrating agents and desiccants contribute to the storage stability of the antifouling coating composition by removing moisture introduced from raw materials, such as pigments and solvents, or water formed by reaction between carboxylic acid compounds and bivalent and trivalent metal compounds in the antifouling coating composition. The dehydrating agents and desiccants that may be used in the antifouling coating compositions according to the present invention include organic and inorganic compounds. Examples of dehydrating agents and drying agents include calcium sulphate hemihydrate, anhydrous calcium sulphate, anhydrous magnesium sulphate, anhydrous sodium sulphate, anhydrous zinc sulphate, molecular sieves and zeolites; orthoesters such as trimethyl orthoformate, triethyl orthoformate, tripropyl orthoformate, triisopropyl orthoformate, tributyl orthoformate, trimethyl orthoacetate and triethyl orthoacetate; ketals; acetals; enolethers; orthoborates such as trimethyl borate, triethyl borate, tripropyl borate, triisopropyl borate, tributyl borate and tri-*tert-*butyl borate; silicates such as trimethoxymethyl silane, tetraethoxysilane and ethyl polysilicate; and isocyanates, such as p-toluenesulfonyl isocyanate.

The preferred dehydrating agents and drying agents are the inorganic compounds.

The carbodiimide or mixture of carbodiimides may be added to the antifouling coating composition at any stage during the production process. If components containing carboxylic acid groups are present in the antifouling coating composition it is preferred to add the carbodiimide or mixture of carbodiimides or parts of the carbodiimide or mixture of carbodiimides after the grinding process. The grinding process is known in the art as a stage in the preparation of antifouling coating compositions by batch processes, wherein high shear forces are applied to break agglomerates so as to obtain a desired particle size.

### Organic colour pigment

The term "organic colour pigment" used in the present invention denotes pigments with organic-chemical bases (i.e. based on carbon chains and carbon rings) which are used to colour the formulation, which term includes carbon black herein. The term pigments denotes particulate solids which are generally practically insoluble (i.e. have a solubility of less than 0.01 gL⁻¹) in the medium in which they are dispersed (i.e. "solvents" and binders, e.g. xylene), and hence essentially physically and chemically unaffected by the vehicle or substrate in which they are incorporated. The organic colour pigments of the present invention are not therefore soluble organic dyes, which are soluble in the medium in which they are dispersed. Typical particle sizes of the organic colour pigments of the present invention are in the range 10 to 500 nm (e.g. 10 to 100 nm), with the exception of carbon black which has a typical average particle size in the range 11-17 nm. Pigments alter appearance by selective absorption and/or by scattering of light and retain a crystal or particulate structure throughout the coloration process.

Examples of organic colour pigments mixed in the antifouling coating composition of the present invention include, but is not limited to, monoazo, disazo, laked azo, β-naphthol, Naphthol AS, benzimidazolone, disazo condensation, azo metal complex pigments and polycyclic pigments such as phthalocyanine, quinacridone, quinacridonequinone, perylene, perinone, thioindigo, thiazineindigo, anthanthrone, anthraquinone, flavanthrone, indanthrone, isoviolanthrone, pyranthrone, dioxazine, quinophthalone, isoindolinone, isoindoline, diketopyrrolopyrrole, azomethine pigments and carbon black.

An exemplary selection of organic pigments includes, but is not limited to, monoazo and disazo pigments, in particular the Colour Index pigments Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Yellow 213, Pigment Yellow 214, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 or Pigment Brown 41; β-naphthol and Naphthol AS pigments, in particular the Colour Index pigments Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 or Pigment Brown 1;
laked azo and metal complex pigments, in particular the Colour Index pigments Pigment Red 48:2, Pigment Red 48:3, Pigment Red 48:4, Pigment Red 57:1, Pigment Red 257, Pigment Orange 68 or Pigment Orange 70;
benzimidazoline pigments, in particular the Colour Index pigments Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 or Pigment Brown 25;
isoindolinone and isoindoline pigments, in particular the Colour Index pigments Pigment Yellow 139 or Pigment Yellow 173;
phthalocyanine pigments, in particular the Colour Index pigments Pigment Blue 15, Pigment Blue 15:1, Pigment Blue 15:2, Pigment Blue 15:4, Pigment Blue 15:6, Pigment Blue 16, Pigment Green 7 or Pigment Green 36;
anthanthrone, anthraquinone, quinacridone, dioxazine, indanthrone, perylene, perinone and thioindigo pigments, in particular the Colour Index pigments Pigment Yellow 196, Pigment Red 122, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23, Pigment Orange 43, Pigment Black 31 or Pigment Black 32;
triarylcarbonium pigments, in particular the Colour Index pigments Pigment Red 169, Pigment Blue 56 or Pigment Blue 61;
diketopyrrolopyrrole pigments, in particular the Colour Index pigments Pigment Red 254, Pigment Red 255, Pigment Red 264, Pigment Red 270, Pigment Red 272, Pigment Orange 71, Pigment Orange 73, Pigment Orange 81;
carbon black pigments, in particular the Colour Index pigments Pigment Black 7.

The organic colour pigments may also include surface modified organic pigments and modified organic pigments for easy dispersability, such as those described in WO 2004/094540.

Although other pigment types may be present in the antifouling coating compositions of the invention, at least one organic colour pigment must be present. We have surprisingly found that the increased stabilising effect of the carbodiimide is particularly marked only in those compositions containing an organic colour pigment. The compositions of the present invention may additionally comprise other pigment types, however, compositions comprising only inorganic pigments were found to exhibit little increase in stability when a carbodiimide is used compared to a traditional dehydrating agent or desiccant as the stabiliser.

The colour pigments may be present in an amount of from 0.2 to 10 wt% of the overall composition, such as 1 to 5 wt% or 2 to 4 wt%.

### Antifouling agent

The antifouling coating composition of the invention contains at least one compound capable of preventing fouling on an object, i.e. an antifouling agent such as a biologically active agent, especially a biocide.

By biologically active agent/compound is meant any chemical compound that prevents the settlement of marine organisms on a surface, and/or prevents the growth of marine organisms on a surface and/or encourages the dislodgement of marine organisms from a surface. Examples of inorganic biologically active compounds include copper and copper compounds such as copper oxides, e.g. cuprous oxide and cupric oxide; copper alloys, e.g. copper-nickel alloys; copper salts, e.g. copper thiocyanate, copper sulphide; and barium metaborate.

Examples of organometallic biologically active compounds include zinc pyrithione; organocopper compounds such as copper pyrithione, copper acetate, copper naphthenate, oxine copper, copper nonylphenolsulfonate, copper bis(ethylenediamine)bis(dodecylbenzensulfonate) and copper bis(pentachlorophenolate); dithiocarbamate compounds such as zinc bis(dimethyldithiocarbamate), zinc ethylenebis(dithiocarbamate), manganese ethylenebis(dithiocarbamate) and manganese ethylene bis(dithiocarbamate) complexed with zinc salt.

Examples of organic biologically active compounds include heterocyclic compounds such as 2-(*tert*-butylamino)-4-(cyclopropylamino)-6-(methylthio)-1,3,5-triazine, 4,5-dichloro-2-*n*-octyl-4-isothiazolin-3-one, 1,2-benzisothiazolin-3-one, 2-(thiocyanatomethylthio)-1,3-benzothiazole and 2,3,5,6-tetrachloro-4-(methylsulphonyl)pyridine; urea derivatives such as 3-(3,4-dichlorophenyl)-1,1-dimethylurea; amides and imides of carboxylic acids, sulphonic acids and sulphenic acids such as *N*-(dichlorofluoromethylthio)phthalimide, *N*-dichlorofluoromethylthio-*N',N'*-dimethyl-*N-*phenylsulfamide, *N*-dichlorofluoromethylthio-*N'*,*N'*-dimethyl-*N-p-*tolylsulfamide and *N*-(2,4,6-trichlorophenyl)maleimide; other organic compounds such as pyridine triphenylborane, amine triphenylborane, 3-iodo-2-propynyl *N-*butylcarbamate, 2,4,5,6-tetrachloroisophthalonitrile, *p-*((diiodomethyl)sulphonyl)toluene and 4-bromo-2-(4-chlorophenyl)-5-(trifluoromethyl)-1H-pyrrole-3-carbonitrile.

Other examples of biologically active agents may be tetraalkylphosphonium halogenides, guanidine derivatives, imidazole containing compounds such as medetomidine and derivatives thereof, macrocyclic lactones includes avermectins and derivatives thereof such as ivermectine, spinosyns and derivatives thereof such as spinosad, and enzymes such as oxidase, proteolytically, hemicellulolytically, cellulolytically, lipolytically and amylolytically active enzymes.

Preferred biologically active agents are cuprous oxide, copper thiocyanate, zinc pyrithione, copper pyrithione, zinc ethylenebis(dithiocarbamate), 2-(*tert*-butylamino)-4-(cyclopropylamino)-6-(methylthio)-1,3,5-triazine, 4,5-dichloro-2-*n*-octyl-4-isothiazolin-3-one, *N-*dichlorofluoromethylthio-*N',N'*-dimethyl-*N-*phenylsulfamide, *N-*dichlorofluoromethylthio-*N',N'*-dimethyl-*N-p*-tolylsulfamide and 4-bromo-2-(4-chlorophenyl)-5-(trifluoromethyl)-1H-pyrrole-3-carbonitrile.

Optionally the biologically active compounds may be encapsulated or adsorbed on an inert carrier or bonded to other materials for controlled release.

The biologically active compounds may be used alone or in mixtures. The use of these biologically active agents is known in antifouling coatings and their use would be familiar to the skilled man.

The total amount of biologically active agent in the antifouling compositions of the invention may be in the range 0.5 to 80 wt%, such as 1 to 70 wt%. It will be appreciated that the amount of this component will vary depending on the end use and the biologically active compound used.

### Composition

In addition to the silyl ester copolymer, carbodiimide, organic colour pigment and antifouling agent, the antifouling coating composition according to the present invention may optionally further comprise one or more components selected among other binders, inorganic pigments, extenders and fillers, additives, solvents and thinners.

An additional binder can be used to adjust the properties of the antifouling coating film. Examples of binders that can be used in addition to the silyl esters of the invention include
rosin materials such as wood rosin, tall oil rosin and gum rosin;
rosin derivatives such as hydrogenated and partially hydrogenated rosin, disproportionated rosin, dimerised rosin, polymerised rosin, maleic acid esters, fumaric acid esters and other esters of rosin and hydrogenated rosin, copper resinate, zinc resinate, calcium resinate, magnesium resinate and other metal resinates of rosin and polymerised rosin and others as described in WO 97/44401;
resin acids and derivatives thereof such as copal resin and sandarach resin; other carboxylic acid containing compounds such as abietic acid, neoabietic acid, dehydroabietic acid, dihydroabietic acid, tetrahydroabietic acid, secodehydroabietic acid, pimaric acid, paramatrinic acid, isoprimaric acid, levoprimaric acid, agathenedicarboxylic acid, sandaracopimalic acid, lauric acid, stearic acid, isostearic acid, oleic acid, linoleic acid, linolenic acid, isononanoic acid, versatic acid, naphthenic acid, tall oil fatty acid, coconut oil fatty acid, soyabean oil fatty acid and derivatives thereof;
acid functional polymers of which the acid group is blocked with divalent metals bonded to a monovalent organic residue, for example as described in EP 0 204 456 and EP 0 342 276; or divalent metals bonded to a hydroxyl residue, for example as described in GB 2 311 070 and EP 0 982 324; or amine for example as described in EP 0 529 693;
hydrophilic copolymers for example (meth)acrylate copolymers as described in GB 2 152 947 and poly(*N-*vinyl pyrrolidone) copolymers and other copolymers as described in EP 0 526 441;
(meth)acrylic polymers and copolymers, such as poly(*n*-butyl acrylate), poly(*n-*butyl acrylate-*co*-isobutyl vinyl ether);
vinyl ether polymers and copolymers, such as poly(methyl vinyl ether), poly(ethyl vinyl ether), poly(isobutyl vinyl ether), poly(vinyl chloride-*co*-isobutyl vinyl ether);
aliphatic polyesters, such as poly(lactic acid), poly(glycolic acid), poly(2-hydroxybutyric acid), poly(3-hydroxybutyric acid), poly(4-hydroxyvaleric acid), polycaprolactone and aliphatic polyester copolymer containing two or more of the units selected from the above mentioned units;
metal containing polyesters for example as described in EP 1 033 392 and EP 1 072 625;
alkyd resins and modified alkyd resins; and
other condensation polymers as described in WO 96/14362.

Examples of inorganic pigments such as titanium dioxide, iron oxides, zinc oxide and zinc phosphate.

Examples of extenders and fillers are minerals such as dolomite, plastorite, calcite, quartz, barite, magnesite, aragonite, silica, wollastonite, talc, chlorite, mica, kaolin and feldspar; synthetic inorganic compounds such as calcium carbonate, magnesium carbonate, barium sulphate, calcium silicate and silica; polymeric and inorganic microspheres such as uncoated or coated hollow and solid glass beads, uncoated or coated hollow and solid ceramic beads, porous and compact beads of polymeric materials such as poly(methyl methacrylate), poly(methyl methacrylate-co-ethylene glycol dimethacrylate), poly(styrene-co-ethylene glycol dimethacrylate), poly(styrene-co-divinylbenzene), polystyrene, poly(vinyl chloride).

Examples of additives that can be added to an antifouling coating composition are reinforcing agents, thixotropic agents, thickening agents, anti-settling agents, plasticizers and solvents.

Examples of reinforcing agents are flakes and fibres. Fibres include natural and synthetic inorganic fibres such as silicon-containing fibres, carbon fibres, oxide fibres, carbide fibres, nitride fibres, sulphide fibres, phosphate fibres, mineral fibres; metallic fibres; natural and synthetic organic fibres such as cellulose fibres, rubber fibres, acrylic fibres, polyamide fibres, polyimide, polyester fibres, polyhydrazide fibres, polyvinylchloride fibres, polyethylene fibres and others as described in WO 00/77102. Preferably, the fibres have an average length of 25 to 2,000 µm and an average thickness of 1 to 50 µm with a ratio between the average length and the average thickness of at least 5.

Examples of thixotropic agents, thickening agents and anti-settling agents are silicas such as fumed silicas, organo-modified clays, amide waxes, polyamide waxes, amide derivatives, polyethylene waxes, oxidised polyethylene waxes, hydrogenated castor oil wax, ethyl cellulose, aluminium stearates and mixtures of thereof.

Examples of plasticizers are chlorinated paraffins, phthalates, phosphate esters, sulphonamides, adipates and epoxidised vegetable oils.

In general, any of these optional components can be present in an amount ranging from 0.1 to 50 wt%, typically 0.5 to 20 wt%, preferably 0.75 to 15 wt% of the antifouling composition. It will be appreciated that the amount of these optional components will vary depending on the end use.

It is highly preferred if the antifouling composition contains a solvent. This solvent is preferably volatile and is preferably organic. Examples of organic solvents and thinners are aromatic hydrocarbons such as xylene, toluene, mesitylene; ketones methyl ethyl ketone, methyl isobutyl ketone, methyl isoamyl ketone, cyclopentanone, cyclohexanone; esters such as butyl acetate, *tert*-butyl acetate, amyl acetate, isoamyl acetate, ethylene glycol methyl ether acetate; ethers such as ethylene glycol dimethyl ether, diethylene glycol dimethyl ether, dibutyl ether, dioxane, tetrahydrofuran, alcohols such as *n*-butanol, isobutanol, benzyl alcohol; ether alcohols such as butoxyethanol, 1-methoxy-2-propanol; aliphatic hydrocarbons such as white spirit; and optionally a mixture of two or more solvents and thinners.

Preferred solvents are aromatic solvents, especially xylene and mixtures of aromatic hydrocarbons.

The amount of solvent is preferably as low as possible. The solvent content may be up to 50 wt% of the composition, preferably up to 45 wt% of the composition, such as up to 40 wt% but may be as low as 15 wt% or less, e.g. 10 wt% or less. Again, the skilled man will appreciate that the solvent content will vary depending on the other components present and the end use of the coating composition.

Alternatively the coating can be dispersed in an organic non-solvent for the film-forming components in the coating composition or in an aqueous dispersion.

The antifouling coating composition of the invention should preferably have solids content above 40 vol%, e.g. above 45 % by volume, such as above 50 vol%, preferably above 55 vol%.

More preferably the antifouling coating composition should have a content of volatile organic compounds (VOC) below 500 g/L, preferably below 400 g/L, e.g. below 390 g/L. VOC content can be calculated (ASTM D5201-01) or measured, preferably measured.

The antifouling coating composition of the invention can be applied to a whole or part of any object surface which is subject to fouling. The surface may be permanently or intermittently underwater (e.g. through tide movement, different cargo loading or swell). The object surface will typically be the hull of a vessel or surface of a fixed marine object such as an oil platform or buoy. Application of the coating composition can be accomplished by any convenient means, e.g. via painting (e.g. with brush or roller) or spraying the coating onto the object. Typically the surface will need to be separated from the seawater to allow coating. The application of the coating can be achieved as conventionally known in the art.

The invention will now be defined with reference to the following non limiting examples.

### Examples

### General procedure for preparation of antifouling coating compositions

The components were mixed in the proportions given in Table 1 together with the stabilisers given in Table 2-5. The mixture was dispersed in the presence of glass beads (approx. 2mm in diameter) in a paint can of 500 ml using a vibrational shaker for 30 minutes. The glass beads were filtered of before testing.

### Accelerated storage stability testing (ASTM D1849-95)

Each coating composition was placed in 250 ml paint can and sealed off. The cans were stored at 52°C. At regular intervals the cans were taken out and the viscosity of the coating composition was measured using a Cone and Plate viscometer and a Stormer viscometer.

### Determination of paint viscosity using Cone and Plate viscometer (ASTM D4287-00)

The viscosity was measured using a digital Cone and Plate viscometer set at a temperature of 23°C.

### Determination of paint viscosity using Stormer viscometer (ASTM D562-10 Method B)

The samples were brought to ambient temperature before measurement. The viscosity was measured using a digital Krebs viscometer.

The following paints were prepared:

**Table 1:**

| **Components (in part by weight)** | | **Blue** | **Black** | **Red** | **Ref** |
|---|---|---|---|---|---|
| Binders | Silyl ester copolymer (50% in xylene) ⁽¹⁾ | 28.2 | 33.0 | 28.8 | 25.2 |
| | Rosin solution (60% in xylene) | 5.0 | 5.0 | 5.0 | 4.0 |
| Biocides | Cuprous oxide, LoLo tint LM | 37.0 | 40.0 | - | - |
| | Cuprous oxide | - | - | 40.0 | 40.0 |
| | Copper pyrithione | 1.6 | 1.6 | 1.6 | 2.0 |
| Organic colour pigments | Phthalocyanine blue ⁽²⁾ | 3.0 | - | - | - |
| | Carbon black ⁽³⁾ | - | 2.5 | - | - |
| | Naphthol red ⁽³⁾ | - | - | 1.5 | - |
| Other pigments and extenders | Titanium dioxide | 2.5 | - | - | - |
| | Iron oxide red | - | - | 0.5 | 2.0 |
| | Talc | 3.7 | 1.0 | 4.0 | 4.5 |
| | Zinc oxide | 8.5 | 6.5 | 8.5 | 6.0 |
| | Zinc phosphate | - | - | - | 5.0 |
| Thixotropic agents and additives | Disparlon A603-20X | 3.0 | - | 3.0 | - |
| | Disparlon 4401-25X | 0.5 | - | 0.5 | - |
| | Bentone 38 | - | 0.5 | - | - |
| | Aerosil 300 | - | 0.8 | - | - |
| | Ethanol denatured | - | 0.3 | - | - |
| Solvents | Xylene | 7.0 | 8.8 | 6.6 | 7.3 |

| | | | | | |
|---|---|---|---|---|---|
| (1) Commercial triisopropylsilyl acrylate copolymer by Nitto Kasei Co. Ltd. (2) Heliogen Blue L 6975 F by BASF (3) Special Black 100 by Evonik (4) Novoperm Red F2RK 70 by Clarian | | | | | |

**Table 2:**

| | | **Examples** | | | | | | **Comparative examples** | |
|---|---|---|---|---|---|---|---|---|---|
| **Components (in part by weight)** | | **B-1** | **B-2** | **B-3** | **B-4** | **B-5** | **B-6** | **CB-1** | **CB-2** |
| Coating composition from Table 1 | Blue | 100.0 | 100.0 | 100.0 | 100.0 | 100.0 | 100.0 | 100.0 | 100.0 |
| Carbodiimide compounds | 1,3-Diisopropylcarbodiimide | 1.0 | | | | | | | |
| | 1,3-Di(sec-butyl)carbodiimide | | 1.0 | | | | | | |
| | 1,3-Dicyclohexylcarbodiimide | | | 1.0 | | | | | |
| | Bis(2,6-diisopropylphenyl) carbodiimide ⁽⁵⁾ | | | | 0.5 | 1.0 | 2.0 | | |
| Dehydrating agents and desiccants | Tetraethoxysilane | | | | | | | 1.0 | |
| | Sylosive A4 | | | | | | | | 1.0 |
| Cone and Plate viscosity | Initial viscosity (cP) | 189 | 189 | 186 | 213 | 216 | 207 | 186 | 210 |
| | After 6 weeks at 52°C (cP) | 720 | 770 | 741 | 519 | 474 | 573 | gel | gel |

| | | | | | | | | | |
|---|---|---|---|---|---|---|---|---|---|
| (5) Stabaxol I LF by Rhein Chemie | | | | | | | | | |

**Table 3:**

| | | **Examples** | | | **Comparative examples** | | |
|---|---|---|---|---|---|---|---|
| **Components (in part by weight)** | | **Bk-1** | **Bk-2** | **Bk-3** | **CBk-1** | **CBk-2** | **CBk-3** |
| Coating composition from Table 1 | Black | 100.0 | 100.0 | 100.0 | 100.0 | 100.0 | 100.0 |
| | 1,3-Dicyclohexylcarbodiimide | | 1.0 | | | | |
| | Bis(2,6-diisopropylphenyl) carbodiimide ⁽⁶⁾ | 1.0 | | 1.0 | | | |
| Dehydrating agents and desiccants | Sylosive A4 | | 1.0 | 1.0 | 1.0 | | |
| | Tetraethoxysilane | | | | | 1.0 | |
| | Calcium sulphate, anhydrous | | | | | | 1.0 |
| Cone and Plate viscosity | Initial viscosity (cP) | 227 | 225 | 216 | 300 | 213 | 263 |
| | After 8 weeks at 52°C (cP) | 490 | 440 | 435 | 672 | 582 | >1000 |
| Stormer viscosity | Initial viscosity (KU) | 78 | 79 | 79 | 86 | 77 | 80 |
| | After 8 weeks at 52°C (KU) | 99 | 99 | 104 | 127 | 116 | 142 |

| | | | | | | | |
|---|---|---|---|---|---|---|---|
| (6) Stabaxol I LF by Rhein Chemie | | | | | | | |

**Table 4:**

| | | **Examples** | | | | **Comparative examples** | |
|---|---|---|---|---|---|---|---|
| **Components (in part by weight)** | | **R-1** | **R-2** | **R-3** | **R-4** | **CR-1** | **CR-2** |
| Coating composition from Table 1 | Red | 100.0 | 100.0 | 100.0 | 100.0 | 100.0 | 100.0 |
| | 1,3-Dicyclohexylcarbodiimide | 1.0 | | | | | |
| | Bis(2,6-diisopropylphenyl) carbodiimide ⁽⁷⁾ | | 1.0 | 1.0 | 1.0 | | |
| Dehydrating agents and desiccants | Sylosive A4 | | | 1.0 | | 1.0 | |
| | Calcium sulphate, anhydrous | | | | 1.0 | | 1.0 |
| Cone and Plate viscosity | Initial viscosity (cP) | 234 | 246 | 243 | 240 | 234 | 282 |
| | After 8 weeks at 52°C (cP) | 367 | 359 | 370 | 360 | >1000 | 610 |
| Stormer viscosity | Initial viscosity (KU) | 91 | 95 | 95 | 95 | 96 | 94 |
| | After 8 weeks at 52°C (KU) | 97 | 100 | 113 | 102 | n.a. | |

| | | | | | | | |
|---|---|---|---|---|---|---|---|
| (7) Stabaxol I LF by Rhein Chemie | | | | | | | |

**Table 5:**

| | | **Comparative examples** | | | |
|---|---|---|---|---|---|
| **Components (in part by weight)** | | **C-1** | **C-2** | **C-3** | **C-4** |
| Coating composition from Table 1 | Reference | 100.0 | 100.0 | 100.0 | 100.0 |
| | 1,3-Dicyclohexylcarbodiimide | 1.0 | | | |
| | Bis(2,6-diisopropylphenyl) carbodiimide ⁽⁸⁾ | | 1.0 | | |
| Dehydrating agents and desiccants | Tetraethoxysilane | | | 1.0 | |
| | Calcium sulphate, anhydrous | | | | 1.0 |
| Cone and Plate viscosity | Initial viscosity (cP) | 216 | 234 | 189 | 237 |
| | After 8 weeks at 52°C (cP) | 309 | 315 | 305 | 347 |
| Stormer viscosity | Initial viscosity (KU) | 95 | 98 | 90 | 97 |
| | After 8 weeks at 52°C (KU) | 91 | 107 | 106 | 97 |

| | | | | | |
|---|---|---|---|---|---|
| (8) Stabaxol I LF by Rhein Chemie | | | | | |

### Discussion

The results in table 2 shows improve storage stability for blue coating formulations containing carbodiimide compounds as stabilisers compared to commonly used dehydrating agents only. Best results are obtained with bis(2,6-diisopropylphenyl)carbodiimide as stabiliser.

The results in table 3 shows improved storage stability for black coating formulations containing carbodiimide compounds or combination of carbodimide compound and dehydrating agent as stabilisers compared to commonly used dehydrating agents alone. Best results are obtained with combination of carbodiimide compounds and dehydrating agents as stabiliser.

The results in table 4 shows improve storage stability for red coating formulations containing carbodiimide compounds or combination of carbodimide compound and dehydrating agent as stabilisers compared to commonly used dehydrating agents alone.

The reference coating formulation contains only inorganic pigments. The results in table 5 shows similar storage stability for reference coating formulations containing carbodiimide compounds and reference coating formulations containing dehydrating agents as stabiliser.

## Claims

1. An antifouling coating composition comprising a silyl ester copolymer, a carbodiimide stabiliser, an organic colour pigment and an antifouling agent.

2. An antifouling coating composition as claimed in claim 1, wherein said silyl ester copolymer comprises at least one monomer (A) of formula (I): 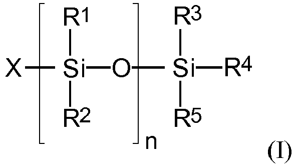 wherein
R¹ and R² are each independently selected from linear or branched C₁₋₄ alkyl groups;
R³, R⁴ and R⁵ are each independently selected from the group consisting of linear or branched C₁₋₂₀ alkyl groups, C₃₋₁₂ cycloalkyl groups, C₆₋₂₀ aryl groups and -OSi(R⁶)₃ groups;
each R⁶ is a linear or branched C₁₋₄ alkyl group,
n is an integer from 0 to 5;
X is an ethylenically unsaturated group, preferably an acryloyloxy group, methacryloyloxy group, (methacryloyloxy)alkylenecarbonyloxy group, (acryloyloxy)alkylenecarbonyloxy group, maleinoyloxy group, fumaroyloxy group, itaconoyloxy group or citraconoyloxy group.

3. An antifouling coating composition according to claim 1 or claim 2, wherein said at least one monomer of formula (I) is present in the amount of 1 to 99 % by mole, preferably 15-60 % by mole, more preferably 20-40 % by mole of the total mixture of comonomers.

4. An antifouling coating composition according to any preceding claim, wherein the silyl ester monomers are compounds of formula (I) in which n=0.

5. An antifouling coating composition according to any preceding claim, wherein the carbodiimide is selected from the group consisting of a monomeric, dimeric or polymeric carbodiimide or mixtures thereof.

6. An antifouling coating composition according to any preceding claim, wherein the carbodiimide has the general formula (i) 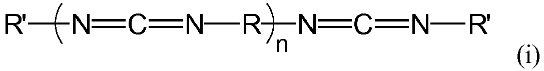 wherein
R is an optionally substituted alkylene, optionally substituted mono or dicycloalkylene or optionally substituted arylene group;
each R' is independently identical or different optionally substituted alkyl, optionally substituted cycloalkyl or optionally substituted aryl groups, and n is an integer from 0 to 500, preferably from 0 to 50.

7. An antifouling coating composition according to any preceding claim, wherein the carbodiimide is a monocarbodiimide of formula (ii)
R'-N=C=N-R' (ii)
wherein R' is as defined in claim 6.

8. An antifouling coating composition according to claim 7, wherein each R' is independently selected from the group consisting of C₁₋₈ alkyl, C₃₋₈ cycloalkyl and optionally substituted C₆₋₁₀ aryl.

9. An antifouling coating composition according to any preceding claim, wherein the carbodiimide is present in an amount of 0.001 wt% to 10 wt%, preferably 0.2 wt% to 1 wt %.

10. An antifouling coating composition according to any preceding claim, wherein the organic colour pigment is selected from the group consisting of monoazo, disazo, laked azo, β-naphthol, Naphthol AS, benzimidazolone, disazo condensation, azo metal complex pigments and polycyclic pigments such as phthalocyanine, quinacridone, quinacridonequinone, perylene, perinone, thioindigo, thiazineindigo, anthanthrone, anthraquinone, flavanthrone, indanthrone, isoviolanthrone, pyranthrone, dioxazine, quinophthalone, isoindolinone, isoindoline, diketopyrrolopyrrole, azomethine pigments and carbon black.

11. An antifouling coating composition according to any preceding claim, wherein the total colour pigments are present in an amount of 0.2 to 10 wt %, such as 1 to 5 wt% or 2 to 4 wt %.

12. An antifouling coating composition according to any preceding claim, further comprising a dehydrating agent or a desiccant.

13. An antifouling coating composition according to any preceding claim wherein said antifouling agent is a compound that prevents the settlement of marine organisms on a surface, and/or prevents the growth of marine organisms on a surface and/or encourages the dislodgement of marine organisms from a surface, preferably present in an amount of 0.5 to 80 wt%, such as 1 to 70 wt%.

14. A process for protecting an object from fouling comprising coating at least a part of said object which is subject to fouling with an anti-fouling coating composition as claimed in any of claims 1 to 13.

15. An object coated with the antifouling coating composition as claimed in any of claims 1 to 13.

## Patentansprüche

1. Antifouling-Beschichtungszusammensetzung, umfassend ein Silylester-Copolymer, einen Carbodiimid-Stabilisator, ein organisches Farbpigment und ein Antifouling-Mittel.

2. Antifouling-Beschichtungszusammensetzung nach Anspruch 1, wobei das Silylester-Copolymer mindestens ein Monomer (A) der Formel (I) umfasst: 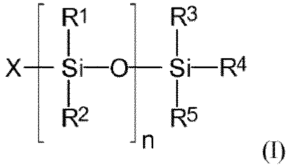 wobei
R¹ und R² jeweils unabhängig ausgewählt sind aus linearen oder verzweigten C₁₋₄-Alkyl-Gruppen;
R³, R⁴ und R⁵ jeweils unabhängig ausgewählt sind aus der Gruppe bestehend aus linearen oder verzweigten C₁₋₂₀-Alkyl-Gruppen, C₃₋₁₂-Cylcoalkyl-Gruppen, C₆₋₂₀-Aryl-Gruppen und -OSi(R⁶)₃-Gruppen;
jedes R⁶ eine lineare oder verzweigte C₁₋₄-Alkyl-Gruppe ist;
n eine ganze Zahl von 0 bis 5 ist;
X eine ethylenisch ungesättigte Gruppe, vorzugsweise eine Acryloyloxy-Gruppe, Methacryloyloxy-Gruppe, (Methacryloyloxy)-alkylenecarbonyoxy-Gruppe, (Acryloxyloxy)-alkylenecarbonyloxy-Gruppe, Maleinoyloxy-Gruppe, Fumaroyloxy-Gruppe, Itaconoyloxy-Gruppe oder Citraconoyloxy-Gruppe ist.

3. Antifouling-Beschichtungszusammensetzung nach Anspruch 1 oder Anspruch 2, wobei das mindestens eine Monomer der Formel (I) in der Menge von 1 bis 99 Mol-%, vorzugsweise 15 bis 60 Mol-%, bevorzugter 20 bis 40 Mol-%, der gesamten Mischung von Comonomeren vorhanden ist.

4. Antifouling-Beschichtungszusammensetzung nach einem der vorstehenden Ansprüche, wobei die Silylester-Monomere Verbindungen der Formel (I) sind, wobei n = 0.

5. Antifouling-Beschichtungszusammensetzung nach einem der vorstehenden Ansprüche, wobei das Carbodiimid ausgewählt ist aus der Gruppe bestehend aus einem monomeren, dimeren oder polymeren Carbodiimid oder Mischungen davon.

6. Antifouling-Beschichtungszusammensetzung nach einem der vorstehenden Ansprüche, wobei das Carbodiimid die allgemeine Formel (i) aufweist: 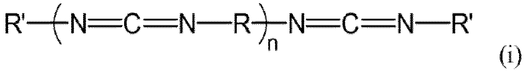 wobei
R eine gegebenenfalls substituierte Alkylen-, gegebenenfalls substituierte Mono- oder Dicycloalkylen- oder gegebenenfalls substituierte Arylen-Gruppe ist;
jedes R' unabhängig identisch oder verschieden gegebenenfalls substituierte Alkyl-, gegebenenfalls substituierte Cycloalkyl- oder gegebenenfalls substituierte ArylGruppen ist, und n eine ganze Zahl von 0 bis 500, vorzugsweise von 0 bis 50, ist.

7. Antifouling-Beschichtungszusammensetzung nach einem der vorstehenden Ansprüche, wobei das Carbodiimid ein Monocarbodiimid der Formel (ii) ist:
R'-N=C=N-R' (ii)
wobei R' wie in Anspruch 6 definiert ist.

8. Antifouling-Beschichtungszusammensetzung nach Anspruch 7, wobei jedes R' unabhängig ausgewählt ist aus der Gruppe bestehend aus C₁₋₈-Alkyl, C₃₋₈-Cycloalkyl und gegebenenfalls substituiertem C₆₋₁₀-Aryl.

9. Antifouling-Beschichtungszusammensetzung nach einem der vorstehenden Ansprüche, wobei das Carbodiimid in einer Menge von 0,001 Gew.-% bis 10 Gew.-%, vorzugsweise 0,2 Gew.-% bis 1 Gew.-%, vorhanden ist.

10. Antifouling-Beschichtungszusammensetzung nach einem der vorstehenden Ansprüche, wobei das organische Farbpigment ausgewählt ist aus der Gruppe bestehend aus Monoazo, Disazo, β-Naphthol, Naphthol-AS, Benzimidazolon, Disazo-Kondensation, Azo-Metallkomplexpigmenten und polycyclischen Pigmenten, wie Phthalocyanin, Chinacridon, Chinacridonchinon, Perylen, Perinon, Thioindigo, Thiazinindigo, Anthanthron, Anthrachinon, Flavanthron, Indanthron, Isoviolanthron, Pyranthron, Dioxazin, Chinophthalon, Isoindolinon, Isoindolin, Diketopyrrolopyrrol, Azomethain-Pigmenten und Ruß.

11. Antifouling-Beschichtungszusammensetzung nach einem der vorstehenden Ansprüche, wobei die gesamten Farbpigmente in einer Menge von 0,2 bis 10 Gew.-%, wie 1 bis 5 Gew.-% oder 2 bis 4 Gew.-%, vorhanden sind.

12. Antifouling-Beschichtungszusammensetzung nach einem der vorstehenden Ansprüche, weiter umfassend ein Dehydratisierungsmittel oder Trocknungsmittel.

13. Antifouling-Beschichtungszusammensetzung nach einem der vorstehenden Ansprüche, wobei das Antifouling-Mittel eine Verbindung ist, die das Absetzen mariner Organismen auf einer Oberfläche verhindert, und/oder das Wachstum mariner Organismen auf einer Oberfläche verhindert und/oder die Entfernung mariner Organismen von einer Oberfläche fördert, vorzugsweise vorhanden in einer Menge von 0,5 bis 80 Gew.-%, wie 1 bis 70 Gew.-%.

14. Verfahren zum Schützen eines Objekts gegen Fouling, umfassend ein Beschichten mindestens eines Teils des Objekts, das dem Fouling ausgesetzt ist, mit einer Antifouling-Beschichtungszusammensetzung nach einem der Ansprüche 1 bis 13.

15. Objekt, welches mit der Antifouling-Beschichtungszusammensetzung nach einem der Ansprüche 1 bis 13 beschichtet ist.

## Revendications

1. Composition de revêtement antisalissure comprenant un copolymère d'ester de silyle, un stabilisateur à base de carbodiimide, un pigment coloré organique et un agent antisalissure.

2. Composition de revêtement antisalissure selon la revendication 1, dans laquelle ledit copolymère d'ester de silyle comprend au moins un monomère (A) de formule (I) : 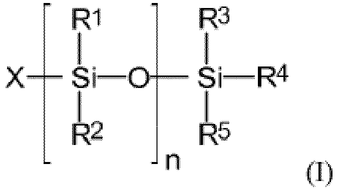 dans laquelle
R¹ et R² sont sélectionnés chacun indépendamment parmi des groupes alkyle en C₁ à C₄ linéaires ou ramifiés ;
R³, R⁴ et R⁵ sont sélectionnés chacun indépendamment dans le groupe constitué de groupes alkyle en C₁ à C₂₀ linéaires ou ramifiés, de groupes cycloalkyle en C₃ à C₁₂, de groupes aryle en C₆ à C₂₀ et de groupes -OSi(R⁶)₃ ;
chaque R⁶ est un groupe alkyle en C₁ à C₄ linéaire ou ramifié,
n est un nombre entier allant de 0 à 5 ;
X est un groupe à insaturation éthylénique, de préférence un groupe acryloyloxy, un groupe méthacryloyloxy, un groupe (méthacryloyloxy)alkylenecarbonyloxy, un groupe (acryloyloxy)alkylenecarbonyloxy, un groupe maléinoyloxy, un groupe fumaroyloxy, un groupe itaconoyloxy ou un groupe citraconoyloxy.

3. Composition de revêtement antisalissure selon la revendication 1 ou la revendication 2, dans laquelle ledit au moins un monomère de formule (I) est présent en la quantité de 1 à 99 % en mole, de préférence de 15 à 60 % en mole, de manière davantage préférée de 20 à 40 % en mole du mélange total de comonomères.

4. Composition de revêtement antisalissure selon une quelconque revendication précédente, dans laquelle les monomères d'ester de silyle sont des composés de formules (I) dans laquelle n = 0.

5. Composition de revêtement antisalissure selon une quelconque revendication précédente, dans laquelle le carbodiimide est sélectionné dans le groupe constitué d'un carbodiimide monomère, dimère ou polymère, ou de mélanges de ceux-ci.

6. Composition de revêtement antisalissure selon une quelconque revendication précédente, dans laquelle le carbodiimide possède la formule générale (i) 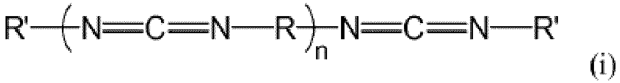 dans laquelle
R est un groupe alkylène facultativement substitué, mono- ou di-cycloalkylène facultativement substitué ou arylène facultativement substitué ;
les R' sont chacun indépendamment des groupes alkyle facultativement substitué, cycloalkyle facultativement substitué ou aryle facultativement substitué identiques ou différents, et
n est un nombre entier allant de 0 à 500, de préférence de 0 à 50.

7. Composition de revêtement antisalissure selon une quelconque revendication précédente, dans laquelle le carbodiimide est un monocarbodiimide de formule (ii)
R'-N=C=N-R' (ii)
dans laquelle R' est tel que défini dans la revendication 6.

8. Composition de revêtement antisalissure selon la revendication 7, dans laquelle chaque R' est sélectionné indépendamment dans le groupe constitué d'un alkyle en C₁ à C₈, d'un cycloalkyle en C₃ à C₈ et d'un aryle en C₆ à C₁₀ facultativement substitué.

9. Composition de revêtement antisalissure selon une quelconque revendication précédente, dans laquelle le carbodiimide est présent en une quantité de 0,001 % en poids à 10 % en poids, de préférence de 0,2 % en poids à 1 % en poids.

10. Composition de revêtement antisalissure selon une quelconque revendication précédente, dans laquelle le pigment coloré organique est sélectionné dans le groupe constitué des pigments monoazoïque, disazoïque, azoïque laqué, β-naphtol, Naphtol AS, de benzimidazolone, disazoïque de condensation, de complexe métallique azoïque et des pigments polycycliques tels que les pigments de phtalocyanine, quinacridone, quinacridonequinone, pérylène, périnone, thioindigo, thiazineindigo, anthanthrone, anthraquinone, flavanthrone, indanthrone, isoviolanthrone, pyranthrone, dioxazine, quinophtalone, isoindolinone, isoindoline, dicétopyrrolopyrrole, azométhine et le noir de carbone.

11. Composition de revêtement antisalissure selon une quelconque revendication précédente, dans laquelle les pigments colorés totaux sont présents en une quantité de 0,2 à 10 % en poids, comme 1 à 5 % en poids ou 2 à 4 % en poids.

12. Composition de revêtement antisalissure selon une quelconque revendication précédente, comprenant en outre un agent déshydratant ou un dessiccatif.

13. Composition de revêtement antisalissure selon une quelconque revendication précédente dans laquelle ledit agent antisalissure est un composé qui empêche la colonisation d'organismes marins sur une surface, et/ou qui empêche la croissance d'organismes marins sur une surface et/ou qui facilite le délogement d'organismes marins à partir d'une surface, de préférence présent en une quantité de 0,5 à 80 % en poids, comme 1 à 70 % en poids.

14. Procédé de protection d'un objet contre les salissures comprenant le revêtement d'au moins une partie dudit objet qui est soumise aux salissures avec une composition de revêtement antisalissure selon l'une quelconque des revendications 1 à 13.

15. Objet revêtu avec la composition de revêtement antisalissure selon l'une quelconque des revendications 1 à 13.
